# EUROPEAN PATENT APPLICATION

(11) **EP 3 702 152 A1**
(43) Date of publication of application: **02.09.2020**
(21) Application number: 19204707.4
(22) Date of filing: 22.10.2019
(51) Int. Cl.: B32B 27/00, H02G 15/18

(54) **A MULTILAYER HEAT-SHRINKABLE TUBE, A CABLE JOINT COMPRISING THE SAME AND METHODS FOR MANUFACTURING AND INSTALLING THE SAME**

(30) Priority: 26.02.2019 EP 19305220
(71) Applicant: Nexans, 92400 Courbevoie (FR)
(72) Inventor: FINELLO, Sante Marcello, 63074 SAN BENEDETTO DEL TRONTO (AP) (IT); MENGHI, Emiliano, ROME (IT); MORGANTI, Sara, 63078 SPINETOLI (AP) (IT)
(74) Representative: Rosenberg, Muriel Sylvie

(57) **Abstract**

This heat-shrinkable tube (10) comprises at least an inner layer (12) comprising a thermoplastic electrically stress-grading material; an outer layer (14) comprising a thermoplastic electrically insulating material; and an outermost layer (16) comprising a thermoplastic electrically semiconductive material.

## Description

The present invention relates to a multilayer heat-shrinkable tube, to a cable joint comprising the same, to a method for manufacturing the same and to a method for installing the tube in the cable joint.

The invention belongs to the general technical field of power cables. By way of non-limiting example, the invention may be used in the field of medium voltage cable heat-shrinkable joints, i.e. for highest permissible voltages ranging from 3 to 42 kV.

Cables which are to be connected with cable connectors usually have an outer cable insulation sheath with a metal shield, comprising additional inner and outer conductive layers for minimizing electrical stress.

When two cables have to be connected to a cable termination or a cable joint, this insulation outer cable sheath and the metal shielding have to be removed together with the outer conductive layer. At the edge of the outer conductive layer, an area of enhanced electric fields is generated thereby and in order to guarantee a safe operation, this enhanced electric field has to be attenuated using appropriate means so that no discharges can occur. This attenuation of the electric field is referred to as electrical stress control.

In order to provide electrical stress control, insulation as well as a conductive screen on medium voltage power cable heat-shrinkable joints, it is known to provide separate tubes to be shrunk along the cable joint: on one hand, an electrical stress control tube for reducing the electrical field on the edge of the semi-conductive layer of the cable and, on the other hand, a dual wall tube for restoring the insulation level and the conductive screen.

However, such a plurality of separate tubes may involve complex installing processes.

Moreover, the composition of prior art tubes often includes some materials, such as elastomeric materials, which require significant shrinking time duration.

The invention aims at remedying the above-mentioned deficiencies of the prior art.

To that end, the present invention provides a heat-shrinkable tube, remarkable in that it comprises at least:
an inner layer comprising a thermoplastic electrically stress-grading material;
an outer layer comprising a thermoplastic electrically insulating material; and
an outermost layer comprising a thermoplastic electrically semiconductive material.

Thus, not only is the installing process extremely simple, because only one tube is to be manipulated, but in addition, due to the fact that the electrically stress-grading, insulating and conductive materials are all thermoplastic, the shrinking time is significantly reduced.

In a particular embodiment, the inner layer has a relative permittivity of at least 12 and an electrical resistivity of at least 1.10¹⁰ Ω.cm.

In a particular embodiment, the outer layer has a relative permittivity lower than or equal to 3.5 and an electrical resistivity of at least 1.10¹⁴ Ω.cm.

The outermost layer may have an electrical resistivity lower than or equal to 100 Ω.cm.

However, in a particular embodiment, the outermost layer has an electrical resistivity lower than or equal to 300 Ω.cm, preferably ranging from 100 Ω.cm to 300 Ω.cm.

In a particular embodiment, the tube further comprises an innermost layer.

In such a particular embodiment, the innermost layer may comprise a thermoplastic electrically stress-grading material, in which case it has a relative permittivity of at least 12 and an electrical resistivity of at least 1.10¹⁰ Ω.cm, or it may comprise a thermoplastic insulating material, in which case it has a relative permittivity lower than or equal to 3.5 and an electrical resistivity of at least 1.10¹⁴ Ω.cm.

As a variant where the tube also comprises an innermost layer, the innermost layer may comprise a thermoplastic electrically semiconductive material and may have a removed portion creating a screened area in the tube.

All of the above-mentioned layers have diameters ranging from 6 mm to 60 mm in a shrunk state and ranging from 36 mm to 180 mm in an expanded state.

In a particular embodiment, the inner layer has an inner diameter comprised between 12 mm and 60 mm, a thickness comprised between 0.5 mm and 2.5 mm and an outer diameter comprised between 17 mm and 62 mm.

In a particular embodiment, the outer layer has a thickness comprised between 2 mm and 7 mm and an outer diameter comprised between 31 mm and 67 mm.

In a particular embodiment, the outermost layer has a thickness comprised between 0.4 mm and 2 mm and an outer diameter comprised between 35 mm and 72 mm.

In a particular embodiment, the inner layer is made of 35 to 55% by weight of a blend of different ethylene-vinyl acetate polymers, 45 to 55% by weight of semiconductive carbon black, 1 to 3.5% by weight of additives and 1 to 2% by weight of cross-linking promoters.

In that embodiment, each of the different ethylene-vinyl acetate polymers has a crystallinity lower than or equal to 45%.

In a variant for use in a cable termination, the inner layer is made of 35 to 50% by weight of ethylene-vinyl acetate, 50 to 60% by weight of semiconductive carbon black, 1 to 3.5% by weight of additives and 1 to 2% by weight of cross-linking promoters.

In a particular embodiment, the outer layer is made of 65 to 80% by weight of ethylene-vinyl acetate, 18 to 35% by weight of fillers, 2 to 6% by weight of additives and 1 to 2.5% by weight of cross-linking promoters.

In that embodiment, the 65 to 80% by weight of ethylene-vinyl acetate of the outer layer have a crystallinity lower than or equal to 45%.

In a variant for use in a cable termination, the outer layer is made of 65 to 80% by weight of ethylene-vinyl acetate, 18 to 35% by weight of flame retardant fillers, 2 to 6% by weight of additives and 1 to 2.5% by weight of cross-linking promoters.

In a particular embodiment, the outermost layer is made of 75 to 90% by weight of ethylene-vinyl acetate, 10 to 20% by weight of semiconductive carbon black, 1 to 3.5% by weight of additives and 1.5 to 2.5% by weight of cross-linking promoters.

In that embodiment, the 75 to 90% by weight of ethylene-vinyl acetate of the outermost layer have a crystallinity lower than or equal to 45%.

The invention also provides a cable joint, remarkable in that it comprises a heat-shrinkable tube as succinctly described above in all embodiments except the above-mentioned last two variants, which are adapted to be used in cable terminations.

The invention also provides a method for manufacturing a heat-shrinkable tube as succinctly described above, remarkable in that it comprises steps of:
co-extruding the inner layer, the outer layer and the outermost layer, the outer layer being arranged around the inner layer and the outermost layer being arranged around the outer layer;
cross-linking the materials constituting the outermost layer, the outer layer and/or the inner layer;
radially expanding the tube.

The invention also provides a method for installing a heat-shrinkable tube in a cable joint as succinctly described above, wherein the cable joint is jointing two cables the ends of which are mechanically connected to each other by a connector, the installing method being remarkable in that it comprises steps of:
wrapping a mastic patch around the connector;
positioning the heat-shrinkable tube over the mastic patch;
heat-shrinking the tube.

The advantages and particular features of the cable joint and of the methods are similar to those of the tube and are therefore not repeated here.

Other aspects and advantages of the invention will become apparent from the following detailed description of particular embodiments, which are given by way of non-limiting examples, with reference to the appended drawings, in which:
- Figure 1 is a schematic view of a triple wall heat-shrinkable tube according to the present invention, in a first particular embodiment;
- Figure 2 is a schematic view of a four-wall heat-shrinkable tube according to the present invention, in a second particular embodiment;
- Figure 3 is a schematic view of a four-wall heat-shrinkable tube according to the present invention, in a third particular embodiment;
- Figure 4 is a flowchart illustrating steps of a method for manufacturing a heat-shrinkable tube according to the invention, in a particular embodiment; and
- Figure 5 is a flowchart illustrating steps of a method for installing a heat-shrinkable tube according to the invention in a cable joint, in a particular embodiment.

A heat-shrinkable tube according to the invention comprises at least three layers or walls, namely, an inner layer comprising a thermoplastic electrically stress-grading material, i.e. which has an electrical stress control property, an outer layer comprising a thermoplastic electrically insulating material and an outermost layer comprising a thermoplastic conductive or semiconductive material.

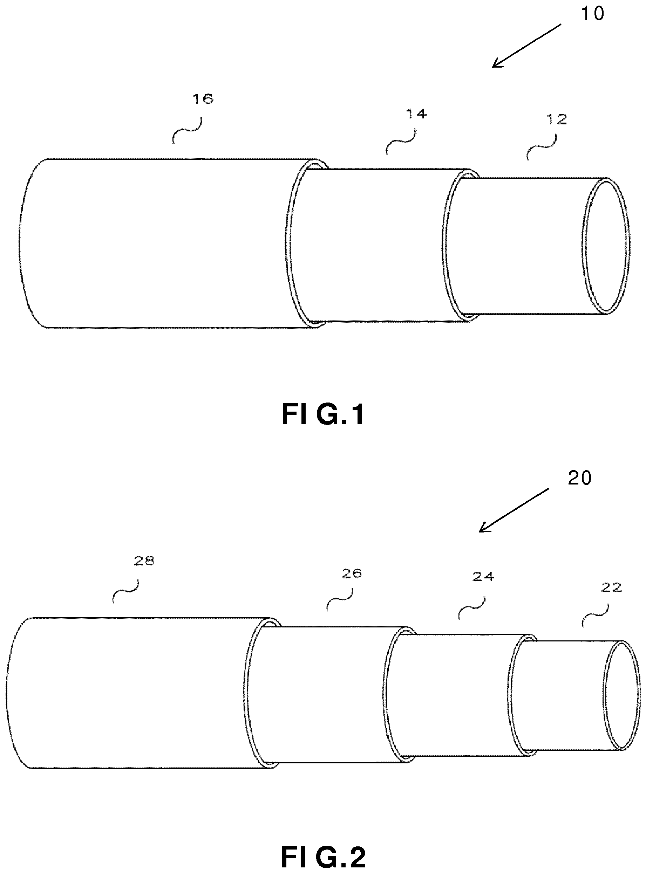

As shown in Figure 1, a heat-shrinkable tube 10 according to a first embodiment of the invention comprises an inner layer 12 comprising a thermoplastic electrically stress-grading material, an outer layer 14 comprising a thermoplastic electrically insulating material and an outermost layer 16 comprising a thermoplastic electrically semiconductive material.

In a particular embodiment where the heat-shrinkable tube 10 is comprised in a cable joint, the inner layer 12 may have a relative permittivity of at least 12 and an electrical resistivity of at least 1.10¹⁰ Q.cm, the outer layer 14 may have a relative permittivity lower than or equal to 3.5 and an electrical resistivity of at least 1.10¹⁴ Q.cm and the outermost layer 16 may have an electrical resistivity lower than or equal to 300 Ω.cm, preferably ranging from 100 Ω.cm to 300 Ω.cm.

In such an embodiment, the inner layer 12 may be made of 35 to 55% by weight of a blend of different ethylene-vinyl acetate polymers, 45 to 55% by weight of semiconductive carbon black, 1 to 3.5% by weight of additives and 1 to 2% by weight of cross-linking promoters, the outer layer 14 may be made of 65 to 80% by weight of ethylene-vinyl acetate, 18 to 35% by weight of fillers, 2 to 6% by weight of additives and 1 to 2.5% by weight of cross-linking promoters and the outermost layer 16 may be made of 75 to 90% by weight of ethylene-vinyl acetate, 10 to 20% by weight of semiconductive carbon black, 1 to 3.5% by weight of additives and 1.5 to 2.5% by weight of cross-linking promoters.

In a particular embodiment, each of the different ethylene-vinyl acetate polymers of the inner layer 12 may have a crystallinity lower than or equal to 45%.

For example, the inner layer 12 may comprise a blend containing four different ethylene-vinyl acetate (EVA) polymers: EVA containing 12 to 14% of vinyl acetate having a crystallinity from 26 to 34%, EVA containing 26 to 28% of vinyl acetate having a crystallinity from 10 to 15%, EVA containing 40 to 50% of vinyl acetate having a crystallinity from 1 to 3% and EVA coextrusion resin having a crystallinity from 10 to 15%.

In a particular embodiment, the 65 to 80% by weight of ethylene-vinyl acetate of the outer layer 14 may have a crystallinity lower than or equal to 45%.

For example, the outer layer 14 may comprise an ethylene-vinyl acetate compound made of EVA containing 12 to 14% of vinyl acetate having a crystallinity from 26 to 34%.

In a particular embodiment, the 75 to 90% by weight of ethylene-vinyl acetate of the outermost layer 16 may have a crystallinity lower than or equal to 45%.

For example, the outermost layer 16 may comprise an ethylene-vinyl acetate compound made of EVA containing 12 to 14% of vinyl acetate having a crystallinity from 26 to 34%.

By way of non-limiting examples, in the whole description, the additives may be antioxidants, UV stabilizers, thermal stabilizers, dyes, process stabilizers, the cross-linking promoters may be TAC (triallyl cyanurate) and the fillers may be flame retardant fillers, e.g. alumina trihydrate, lubricants, inert fillers such as kaolin, metal oxides such as titanium dioxide.

In a variant where the heat-shrinkable tube 10 is comprised in a cable termination, the inner layer 12 may be made of 35 to 50% by weight of ethylene-vinyl acetate, 50 to 60% by weight of semiconductive carbon black, 1 to 3.5% by weight of additives and 1 to 2% by weight of cross-linking promoters, the outer layer 14 may be made of 65 to 80% by weight of ethylene-vinyl acetate, 18 to 35% by weight of fillers, 2 to 6% by weight of additives and 1 to 2.5% by weight of cross-linking promoters and the outermost layer 16 may be made of 75 to 90% by weight of ethylene-vinyl acetate, 10 to 20% by weight of semiconductive carbon black, 1 to 3.5% by weight of additives and 1.5 to 2.5% by weight of cross-linking promoters.

The heat-shrinkable tube according to the invention may further comprise an additional layer.

As shown in Figure 2, a heat-shrinkable tube 20 according to a second embodiment of the invention comprises such an additional layer, namely, an innermost layer 22 which comprises a thermoplastic electrically stress-grading material, which may have a relative permittivity of at least 12 and an electrical resistivity of at least 1.10¹⁰ Ω.cm.

The innermost layer 22 may comprise ethylene-vinyl acetate filled with carbon black, for example 35 to 55% by weight of ethylene-vinyl acetate, 45 to 55% by weight of carbon black, 1 to 3.5% by weight of additives and 1 to 2% by weight of cross-linking promoters.

The heat-shrinkable tube 20 also comprises an inner layer 24, an outer layer 26 and an outermost layer 28 which are respectively similar to the inner layer 12, the outer layer 14 and the outermost layer 16 of the tube 10 of the first embodiment.

As a variant, the innermost layer 22 may comprise a thermoplastic electrically insulating material, which may have a relative permittivity lower than or equal to 3.5 and an electrical resistivity of at least 1.10¹⁴ Ω.cm.

In that variant, the innermost layer 22 may comprise polyamide or ethylene-vinyl acetate (EVA) or polypropylene (PP) filled with carbon black, for example 65 to 80% by weight of polyamide or EVA or PP, 10 to 20% by weight of carbon black, 1 to 3.5% by weight of additives and 1.5 to 2.5% by weight of cross-linking promoters.

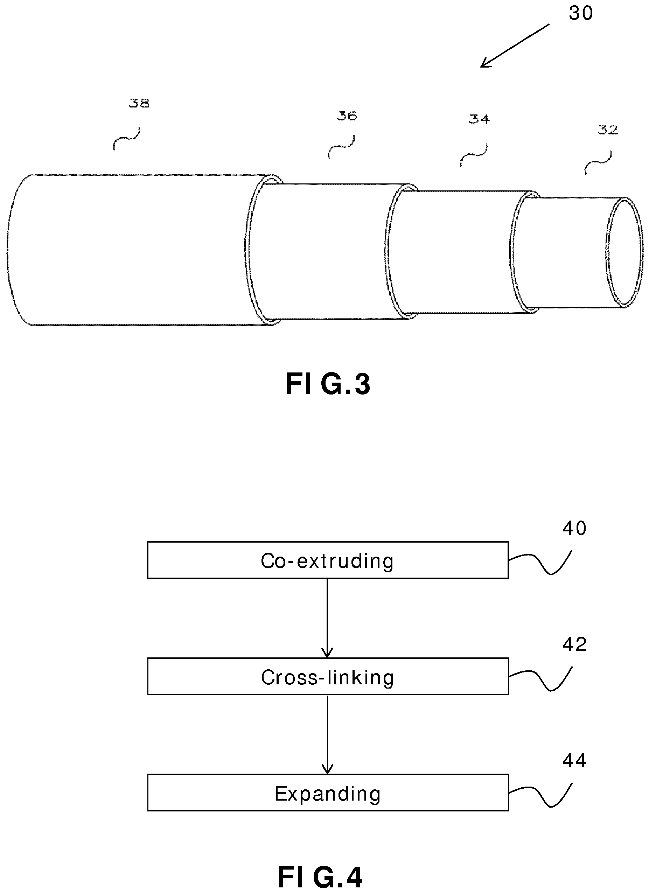

As shown in Figure 3, a heat-shrinkable tube 30 according to a third embodiment of the invention also comprises an additional layer, namely, an innermost layer 32 which comprises a thermoplastic electrically semiconductive material. For example, the innermost layer 32 may comprise 75 to 90% by weight of ethylene-vinyl acetate, 10 to 20% by weight of semiconductive carbon black, 1 to 3.5% by weight of additives and 1.5 to 2.5% by weight of cross-linking promoters.

During manufacturing, a portion of a predetermined amount of mm of the innermost layer 32 is removed, so as to create a screened area i.e. a Faraday cage in the tube 30.

In a particular embodiment, the inner layer 12, 24, 34 has an inner diameter comprised between 12 mm and 60 mm, a thickness comprised between 0.5 mm and 2.5 mm and an outer diameter comprised between 17 mm and 62 mm, the outer layer 14, 26, 36 has a thickness comprised between 2 mm and 7 mm and an outer diameter comprised between 31 mm and 67 mm and the outermost layer 16, 28, 38 has a thickness comprised between 0.4 mm and 2 mm and an outer diameter comprised between 35 mm and 72 mm.

As shown in Figure 4, a method for manufacturing the heat-shrinkable tube 10, 20 or 30 comprises a first step 40 of co-extruding the innermost layer (if any), the inner layer, the outer layer and the outermost layer. The outer layer is arranged around the inner layer and the outermost layer is arranged around the outer layer. In case of a four-wall tube having an innermost layer, the inner layer is arranged around the innermost layer.

As a non-limiting example, in a triple wall tube 10, the diameters and thicknesses of the various layers may be as follows after the co-extruding step 40:

| | |
|---|---|
| Inner diameter of inner layer | 12 mm |
| Thickness of inner layer | 2.5 mm |
| Outer diameter of inner layer | 17 mm |
| Thickness of outer layer | 7 mm |
| Outer diameter of outer layer | 31 mm |
| Thickness of outermost layer | 2 mm |
| Outer diameter of outermost layer | 35 mm |

As a non-limiting example, in a four-layer tube 20 or 30, the diameters and thicknesses of the various layers may be as follows after the co-extruding step 40:

| | |
|---|---|
| Inner diameter of innermost layer | 10 mm |
| Thickness of innermost layer | 1 mm |
| Outer diameter of innermost layer | 12 mm |
| Thickness of inner layer | 2.5 mm |
| Outer diameter of inner layer | 17 mm |
| Thickness of outer layer | 7 mm |
| Outer diameter of outer layer | 31 mm |
| Thickness of outermost layer | 2 mm |
| Outer diameter of outermost layer | 35 mm |

More generally, in a tube 10, 20, 30, all of the above-mentioned layers have diameters ranging from 6 mm to 60 mm in a shrunk state i.e. after the co-extruding step 40.

During the following step 42, the materials constituting the outermost layer, the outer layer and/or the inner layer undergo cross-linking. In case of a four-wall tube having an innermost layer, the materials constituting the innermost layer may also undergo cross-linking.

The cross-linking process may use electron-beam irradiation, which is known per se and will therefore not be described in detail here.

During the last step 44, the tube 10, 20 or 30 is radially expanded.

As a non-limiting example, in a triple wall tube 10, the diameters and thicknesses of the various layers may be as follows after the expanding step 44:

| | |
|---|---|
| Inner diameter of inner layer | 68 mm |
| Thickness of inner layer | 0.53 mm |
| Outer diameter of inner layer | 69.06 mm |
| Thickness of outer layer | 2.35 mm |
| Outer diameter of outer layer | 73.77 mm |
| Thickness of outermost layer | 0.5 mm |
| Outer diameter of outermost layer | 74.77 mm |

As a non-limiting example, in a four-layer tube 20 or 30, the diameters and thicknesses of the various layers may be as follows after the expanding step 44:

| | |
|---|---|
| Inner diameter of innermost layer | 66 mm |
| Thickness of innermost layer | 0.2 mm |
| Outer diameter of innermost layer | 66.3 mm |
| Thickness of inner layer | 0.5 mm |
| Outer diameter of inner layer | 67.4 mm |
| Thickness of outer layer | 0.5 mm |
| Outer diameter of outer layer | 68.4 mm |
| Thickness of outermost layer | 0.5 mm |
| Outer diameter of outermost layer | 69.4 mm |

More generally, in a tube 10, 20 or 30, all of the above-mentioned layers have diameters ranging from 36 mm to 180 mm in an expanded state i.e. after the expanding step 44.

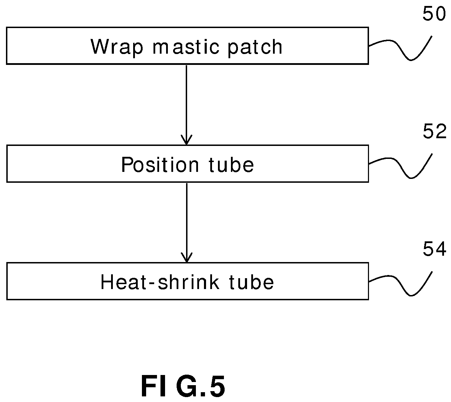

The flowchart of Figure 5 shows steps of a particular embodiment of a method for installing the heat-shrinkable tube 10, 20 or 30 in a cable joint that is jointing two cables, the ends of which are mechanically connected with each other by a connector.

According to the invention, during a first step 50, an operator wraps a mastic patch around the connector area, advantageously centering the patch over the connector with equal distance at both sides.

Optionally, if the cables have a semiconductive layer and an insulation, the operator may then apply over the mastic patch a layer of stress relief mastic overlapping the semiconductive layer and the insulation of the cables, for example as a short mastic strip.

Next, in a step 52, the operator positions the heat-shrinkable tube 10, 20 or 30 in the center of the joint, over the mastic patch. Thus, the operator does not need to manually squeeze the mastic patch when applying it, because this will be done by the shrinking of the heat-shrinkable tube 10, 20 or 30 over the mastic patch.

Namely, in a following step 54, the operator may pre-heat the heat-shrinkable tube 10, 20 or 30, e.g. for a minute, and then starts shrinking, advantageously from the center towards the ends of the tube.

Step 54 ends when the surface of the heat-shrinkable tube 10, 20 or 30 is smooth.

The cable joint may then be finalized through conventional steps, comprising for example positioning and fixing a copper stocking mesh over the heat-shrinkable tube 10, 20 or 30, applying a layer of sealing mastic to the ends of the cable sheath and positioning and heat-shrinking over the center of the joint an outer protection heat-shrinkable sleeve that may contain adhesive.

## Claims

1. A heat-shrinkable tube (10; 20; 30), **characterized in that** it comprises at least:
an inner layer (12; 24; 34) comprising a thermoplastic electrically stress-grading material;
an outer layer (14; 26; 36) comprising a thermoplastic electrically insulating material; and
an outermost layer (16; 28; 38) comprising a thermoplastic electrically semiconductive material.

2. A heat-shrinkable tube (10; 20; 30) according to claim 1, **characterized in that** said inner layer (12; 24; 34) has a relative permittivity of at least 12 and an electrical resistivity of at least 1.10¹⁰ Ω.cm.

3. A heat-shrinkable tube (10; 20; 30) according to claim 1 or 2, **characterized in that** said outer layer (14; 26; 36) has a relative permittivity lower than or equal to 3.5 and an electrical resistivity of at least 1.10¹⁴ Ω.cm.

4. A heat-shrinkable tube (10; 20; 30) according to claim 1, 2 or 3, **characterized in that** said outermost layer (16; 28; 38) has an electrical resistivity lower than or equal to 300 Ω.cm, preferably ranging from 100 Ω.cm to 300 Ω.cm.

5. A heat-shrinkable tube (10; 20; 30) according to any of the preceding claims, **characterized in that** it further comprises an innermost layer (22; 32).

6. A heat-shrinkable tube (10; 20; 30) according to claim 5, **characterized in that** said innermost layer (22) comprises a thermoplastic electrically stress-grading material.

7. A heat-shrinkable tube (10; 20; 30) according to claim 6, **characterized in that** said innermost layer (22) has a relative permittivity of at least 12 and an electrical resistivity of at least 1.10¹⁰ Ω.cm.

8. A heat-shrinkable tube (10; 20; 30) according to claim 5, **characterized in that** said innermost layer (22) comprises a thermoplastic insulating material.

9. A heat-shrinkable tube (10; 20; 30) according to claim 8, **characterized in that** said innermost layer (22) has a relative permittivity lower than or equal to 3.5 and an electrical resistivity of at least 1.10¹⁴ Ω.cm.

10. A heat-shrinkable tube (10; 20; 30) according to claim 5, **characterized in that** said innermost layer (32) comprises a thermoplastic electrically semiconductive material and has a removed portion creating a screened area in said tube (10; 20; 30).

11. A heat-shrinkable tube (10; 20; 30) according to any of the preceding claims, **characterized in that** all of said layers have diameters ranging from 6 mm to 60 mm in a shrunk state and ranging from 36 mm to 180 mm in an expanded state.

12. A heat-shrinkable tube (10; 20; 30) according to any of the preceding claims, **characterized in that** said inner layer (12; 24; 34) is made of 35 to 55% by weight of a blend of different ethylene-vinyl acetate polymers, 45 to 55% by weight of semiconductive carbon black, 1 to 3.5% by weight of additives and 1 to 2% by weight of cross-linking promoters.

13. A heat-shrinkable tube (10; 20; 30) according to any of the preceding claims, **characterized in that** said outer layer (14; 26; 36) is made of 65 to 80% by weight of ethylene-vinyl acetate, 18 to 35% by weight of fillers, 2 to 6% by weight of additives and 1 to 2.5% by weight of cross-linking promoters.

14. A heat-shrinkable tube (10; 20; 30) according to any of the preceding claims, **characterized in that** said outermost layer (16; 28; 38) is made of 75 to 90% by weight of ethylene-vinyl acetate, 10 to 20% by weight of semiconductive carbon black, 1 to 3.5% by weight of additives and 1.5 to 2.5% by weight of cross-linking promoters.

15. A heat-shrinkable tube (10; 20; 30) according to claim 12, **characterized in that** each of the different ethylene-vinyl acetate polymers of said inner layer (12; 24; 34) has a crystallinity lower than or equal to 45%.

16. A heat-shrinkable tube (10; 20; 30) according to claim 13, **characterized in that** said 65 to 80% by weight of ethylene-vinyl acetate of said outer layer (14; 26; 36) have a crystallinity lower than or equal to 45%.

17. A heat-shrinkable tube (10; 20; 30) according to claim 14, **characterized in that** said 75 to 90% by weight of ethylene-vinyl acetate of said outermost layer (16; 28; 38) have a crystallinity lower than or equal to 45%.

18. A cable joint, **characterized in that** it comprises a heat-shrinkable tube (10; 20; 30) according to any of the preceding claims.

19. A method for manufacturing a heat-shrinkable tube (10; 20; 30) according to any of claims 1 to 17, **characterized in that** it comprises steps of:
co-extruding (40) said inner layer (12; 24; 34), said outer layer (14; 26; 36) and said outermost layer (16; 28; 38), said outer layer (14; 26; 36) being arranged around said inner layer (12; 24; 34) and said outermost layer (16; 28; 38) being arranged around said outer layer (14; 26; 36);
cross-linking (42) the materials constituting said outermost layer (16; 28; 38), said outer layer (14; 26; 36) and/or said inner layer (12; 24; 34);
radially expanding (44) said tube (10; 20; 30).

20. A method for installing a heat-shrinkable tube (10; 20; 30) in a cable joint according to claim 18, wherein said cable joint is jointing two cables the ends of which are mechanically connected with each other by a connector, **characterized in that** it comprises steps of:
wrapping (50) a mastic patch around said connector;
positioning (52) said heat-shrinkable tube (10; 20; 30) over said mastic patch;
heat-shrinking (54) said tube (10; 20; 30).
